Europäisches Patentamt

European Patent Office

Office européen des brevets

(11) Veröffentlichungsnummer: **0 110 188**
**A1**

(19)

# (12) EUROPÄISCHE PATENTANMELDUNG

(21) Anmeldenummer: 83111006.9

(22) Anmeldetag: 04.11.83

(51) Int. Cl.³: **B 62 K 25/08**

(30) Priorität: **19.11.82 DE 3242830**

(43) Veröffentlichungstag der Anmeldung: **13.06.84**
**Patentblatt 84/24**

(84) Benannte Vertragsstaaten: **DE FR GB IT**

(71) Anmelder: **BAYERISCHE MOTOREN WERKE**
**Aktiengesellschaft, Postfach 40 02 40 Petuelring 130,**
**D-8000 München 40 (DE)**

(72) Erfinder: **Brandlhuber, Benno, Schirmerweg 12,**
**D-8000 München 60 (DE)**

(74) Vertreter: **Dexheimer, Rolf, Bayerische Motoren Werke**
**Aktiengesellschaft Postfach 40 02 40 Petuelring 130 -**
**AJ-31, D-8000 München 40 (DE)**

(54) **Federnde Vorderradaufhängung für Motorräder.**

㊗ Es wird eine federnde Vorderradaufhängung für Motorräder beschrieben, die ein Eintauchen der Vorderradaufhängung während eines Bremsvorganges vermeiden soll. Zu diesem Zweck sind am Vorderrad Bremsmittel vorgesehen, die ein hydraulisches System beaufschlagen. Das hydraulische System besteht aus einem Geberzylinder (10), der über Leitungen (11) mit einem Druckzylinder (12) verbunden ist. Der Druckzylinder ist zwischen dem gefederten und dem ungefederten Abschnitt der Radaufhängung angeordnet, und er versucht während des Bremsvorganges die beiden Abschnitte auseinanderzudrücken. In einem besonderen Ausführungsbeispiel übernimmt ein Teleskopstoßdämpfer einer Radgabel die Aufgaben des Druckzylinders.

Federnde Vorderradaufhängung für Motorräder

Die Erfindung betrifft eine federnde Vorderradaufhängung für Motorräder nach dem Oberbegriff des Hauptanspruchs.

Der Zweck solcher Vorderradaufhängungen besteht darin, das Eintauchen
des Vorderrades beim Bremsen zu verringern. Allgemein wird dies mit
dem Schlagwort Anti-Dive bezeichnet. Eine solche Anti-Dive Einrichtung
zeigt die internationale Anmeldung WO 82/00445. Hier weist das Vorderrad eine Scheibenbremse auf mit einer um die Radachse schwenkbaren
Bremszange. Beim Bremsvorgang drückt die Bremszange auf den Kolben
eines Geberzylinders. Der sich aufbauende Druck soll wiederum über
einen Druckzylinder die Feder der Aufhängung spannen und dadurch den
das Eintauchen bewirkenden Kräften entgegenwirken. Bei einer Analyse
der auftretenden Kräfte zeigt sich jedoch, daß ohne eine komplizierte
wegabhängige Regelung nur zwei Stellungen des Druckzylinders definiert
sind: ganz eingefahren oder ganz ausgefahren, dazwischen gibt es
keinen stabilen Zustand, d.h. dem proportional mit dem Bremsmoment
steigenden Nickmoment wir bei diesem System nicht kontinuierlich
entgegengewirkt. Erst ab einer bestimmten Bremsbeschleunigigung
beginnt das System zu wirken und zwar derart, daß die gefederte Massen
des Motorrads mit dem gesamten zur Verfügung stehenden Weg des Druckzylinders vorne angehoben werden.

Aufgabe der Erfindung ist es daher, eine gattungsgemäße Vorderradaufhängung so auszubilden, daß ein Eintauchen des Vorderrades während
eines Bremsvorgangs kontinuierlich verringert bzw. ganz ausgeschaltet
wird, die Federeigenschaften jedoch unbeeinflußt bleiben.

Die Aufgabe wird erfindungsgemäß mit den Merkmalen des Hauptanspruchs gelöst. Vorteilhafte Ausgestaltungen der Erfindung ergeben sich aus den Unteransprüchen.

Beim Bremsen des Motorrades tritt an der Vorderradaufhängung eine nach unten gerichtete Kraft auf, die aus der dynamischen Achslastverteilung resultiert. Diese Kraft versucht die Aufhängung zusammenzudrücken. Durch seine Anordnung zwischen dem ungefederten und dem gefederten Abschnitt der Radaufhängung kann der Druckzylinder, sobald der Bremsvorgang eingeleitet wird und sich in ihm über den Geberzylinder ein Druck aufbaut, diese beiden Abschnitte der Aufhängung auseinanderdrücken. Er erzeugt dadurch eine Kraft, die der dynamischen Achslastveränderung entgegengesetzt ist. Dabei ist diese Kraft ebenso wie die aus der dynamischen Achslastveränderung proportional zum aufgebrachten Bremsmoment. Je nach Dimensionierung des Hydrauliksystem, können sich die beiden Kräfte aufheben, so daß das Vorderrad bei einem Bremsvorgang nicht mehr eintaucht, unabhängig vom aufgebrachten Bremsmoment.

Die Erfindung läßt sich bei jeder Vorderradaufhängung anwenden, die sich über eine Feder oder ein Federdämpfersystem in gefederte und ungefederte Maßen aufteilt. Besonders vorteilhaft eignet sich die Erfindung bei Vorderradaufhängungen mit einer Vorderradgabel, bei der die Gabelschenkel als Teleskopstoßdämpfer ausgebildet sind. Dabei besteht jeder Gabelschenkel aus einem die Achswelle des Vorderrades aufnehmenden Gleitrohr und einem in das Gleitrohr gegen die Kraft einer Druckfeder eintauchbaren Standrohr. Sind sowohl die Gleitrohre als auch die Standrohre mit je einer Gabelbrücke zusammengehalten, so ist es zweckmäßig, das Zylindergehäuse an der Gabelbrücke der Standrohre und den Kolben über eine Kolbenstange an der Gabelbrücke der Gleitrohre zu befestigen. Bei einem Bremsvorgang versucht der Druckzylinder über die Gabelbrücken die Standrohre aus den Gleitrohren herauszudrücken. Als ungefederter Abschnitt der Radaufhängung sind hier im wesentlichen die Gleitrohre zu sehen, als gefederter Abschnitt die Standrohre und der in der Regel an ihnen befestigte Lenkkopf.

Durch die Anbringung des Zylindergehäuses an der Gabelbrücke der Standrohre, läßt sich die Achse des Druckzylinders in die Lenkachse legen. Dadurch werden die Massenträgheitskräfte um die Lenkachse nur geringfügig erhöht. Zusätzlich wird bei dieser Anordnung beim Bremsen ein Moment erzeugt, das dem Biegemoment aus der Bremskraft und der Gabellänge entgegenwirkt und so die Losbrechkräfte in der Gabel verringert. Besonders vorteilhaft ist es, wenn der Steuerkopf und der Druckzylinder zusammengefaßt sind. Dadurch erhält man neben den genannten Vorteilen zusätzlich noch eine kompakte Bauweise. Ganz allgemein trägt der Druckzylinder bei dieser Anordnung zur Versteifung der Vorderradgabel bei, der dadurch zusätzliche Stabilität verliehen wird.

Unabhängig von gebremster oder ungebremster Fahrt, wird bei Federbewegungen Hydraulikflüssigkeit zwischen dem Druckzylinder und dem Geberzylinder pulsieren. Die translatorischen Bewegungen der Teleskopstoßdämpfer führen zu Winkelausschlägen der Bremszange. Es ist daher notwendig, daß der Kolben des Geberzylinders mit der Bremszange stets verbunden ist, sei es daß die Bremszange durch eine Feder an den Kolben bzw. dessen Kolbenstange gedrückt wird, sei es daß die Bremszange mit dem Kolben über geeignete Gelenke verbunden ist. Ein solches Gelenk muß die Verschiebungsrichtung des Kolbens ebenso berücksichtigen, wie die Bewegung des Bremssattels auf einer Kreisbahn.

Die vorbeschriebene Vorderradgabel weist in der Regel in ihren Teleskopstoßdämpfern neben der Druckfeder auch Dämpfungsmittel auf, durch die die Federschwingungen gedämpft werden. In einer besonders zweckmäßigen Ausführung macht sich die Erfindung den Umstand des Pulsierens der Hydraulikflüssigkeit zwischen Druck- und Geberzylinder zunutze, in dem sie in den die beiden Zylinder verbindenden Leitungen Drosselelemente vorsieht. Diese Drosselelemente wirken ähnlich den Dämpfungselementen in den Teleskopstoßdämpfern, so daß auf diese verzichtet werden kann. Dadurch erhält man geringere Massenkräfte um die Lenkachse und geringere Losbrechkräfte in der Vorderradgabel, die sich außerdem einfach aufbauen läßt.

Eine besondere kompakte Bauweise erhält man dadurch, daß der Druckzylinder nicht als getrenntes Bauteil ausgeführt ist, sondern die Teleskopstoßdämpfer seine Aufgabe mitübernehmen. Hier müssen allerdings die Teleskopstoßdämpfer mit Dämpfungselemente ausgestattet sein in der Weise, daß am Gleitrohr über eine Kolbenstange ein Dämpferkolben befestigt ist. Der Dämpferkolben taucht in das Standrohr ein und bildet in diesem eine obere und eine untere Arbeitskammer für eine Dämpfungsflüssigkeit. Bei den Federbewegungen der Gabel fließt die Dämpferflüssigkeit von der einen Arbeitskammer in die andere. Die dabei eintauchende Kolbenstange verdrängt zusätzlich Dämpfungsflüssigkeit, für die ein Ausgleichsraum vorgesehen sein muß. Der Ausgleichsraum wird nach der Erfindung von der Druckkammer des Geberzylinder gebildet. Dabei ist die Druckkammer mit den Arbeitskammern verbunden. Bei einem Bremsvorgang drückt die Bremszange über den Geberzylinder die Dämpfungsflüssigkeit in die Arbeitskammern des Teleskopstoßdämpfers. Am Standrohr wirkt dadurch eine Kraft, die versucht das Standrohr aus dem Gleitrohr zu ziehen. Andererseits wiederum drückt am Standrohr die aus der dynamischen Achslastveränderung resultierenden Kraft nach unten, die versucht, das Standrohr in das Gleitrohr hineinzuschieben. Die beiden Kräfte sind einander entgegengerichtet und heben sich im Idealfall auf, so daß ein Eintauchen der Radgabel nicht stattfindet.

Ein in sich geschlossenes System erhält man, wenn die Kolbenstange des Dämpferkolbens als Rohr ausgebildet ist, das sich in die obere Arbeitskammer öffnet. An seine andere Seite, also am Boden des Gleitrohrs schließen sich Kanäle an, die zum Druckraum des Geberzylinders führen. Die Kanäle können teilweise durch Bohrungen in dem Gleitrohr selbst, teilweise durch Bauteile, die mit dem Gleitrohr verbunden sind ausgebildet sein. Am Gleitrohr ist darüber hinaus das Zylindergehäuse des Geberzylinders ausgeformt. Die Kanäle können aber auch durch eine seperate Druckleitung zwischen dem Geberzylinder und den Arbeitskammern ersetzt werden.

Die einstückige Ausformung dieses Zylindergehäuses ist jedoch nicht auf den soeben beschriebenen Anwendungsfall beschränkt. Eine solche integrierte Bauweise wird bei jeder Vorderradgabel mit Teleskopstoßdämpfern zweckmäßig sein.

Der Druckzylinder wirkt nicht auf die Druckfeder, insbesondere verkürzt er sie nicht. Damit steht auch während des Bremsens der gesamte Federweg zur Verfügung. Daneben läßt sich die Erfindung ohne großen Kostenaufwand verwirklichen.

Nachfolgend sind anhand der Zeichnung zwei vorteilhafte Ausführungsbeispiele näher erläutert. Es zeigen

- Fig. 1 eine Vorderradaufhängung eines Motorrades mit einer ersten Ausführungsform der Erfindung,

- Fig. 2 eine Ansicht in Pfeilrichtung Z nach Fig. 1 und

- Fig. 3 eine zweite Ausführungsform der Erfindung, bei der der Druckzylinder als Teil eines Teleskopstoßdämpfers ausgeführt ist.

Soweit sich die einzelnen Bauteile in den Figuren entsprechen, tragen sie die gleichen Bezugszeichen.

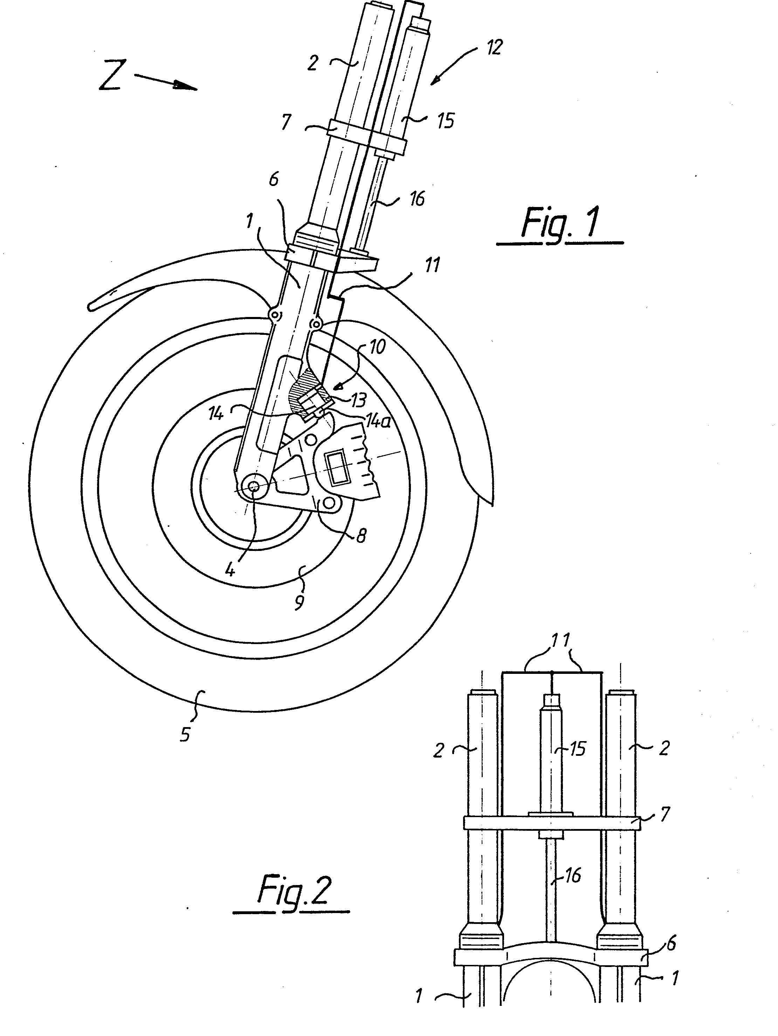

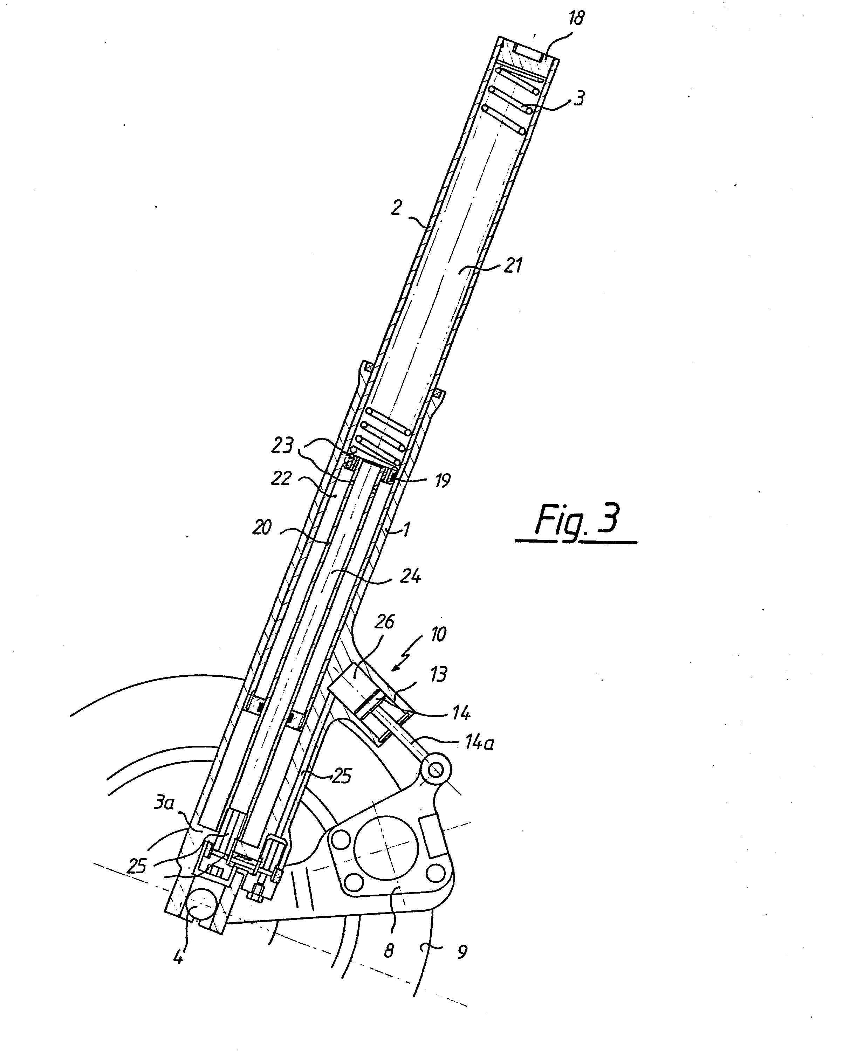

Die in Fig. 1 dargestellte federnde Vorderradaufhängung für Motorräder ist als Vorderradgabel, wie Fig. 2 deutlich erkennen läßt, ausgelegt. Dabei sind die Gabelschenkel als Teleskopstoßdämpfer ausgebildet mit einem Gleitrohr 1, in das ein Standrohr 2 eintaucht. Zwischen dem Gleitrohr 1 und dem Standrohr 2 ist eine Druckfeder angeordnet. Die Druckfeder ist in Fig. 1 nicht sichtbar, sie ist aber vom gleichen Typ wie die in Fig. 3 dargestellte und dort mit 3 bezeichnete. An seinen den Standrohren 2 abgewandten Enden nehmen die Gleitrohre 1 eine Achswelle 4 eines Vorderrades 5 auf. Die Gleitrohre 1 und die Standrohre 2 sind jeweils mit einer Gabelbrücke 6 und 7 zusammengehalten.

An der Achswelle 4 ist drehbar um sie eine Bremszange 8 gelagert, die mit einer Bremsscheibe 9 zusammenarbeitet. Nach dem in Fig. 1 und 2 dargestellten Beispiel weist das Vorderrad 5 an jeder Seite eine solche Bremszange 8 und die entsprechende Bremsscheibe 9 auf. Es ist aber auch möglich, daß nur an einer Radseite solche Bremsmittel vorgesehen sind. Das gleiche gilt für einen Geberzylinder eines nachfolgend näher beschriebenen Hydrauliksystem. Außerdem ist es nicht notwendig, eine Scheibenbremse zu verwenden. Es läßt sich auch jede andere Art von Fahrzeugbremse verwenden, bei der während des Bremsvorganges eines ihrer Teile auf den Geberzylinder wirken kann.

Das Hydrauliksystem umfaßt den Geberzylinder 10, der über Leitungen 11 mit einem Druckzylinder 12 verbunden ist. Das Zylindergehäuse 13 des Geberzylinders 10 ist dabei einstückig mit dem Standrohr 1 ausgeführt und durch einen Fortsatz dieses Rohres gebildet. Im Zylindergehäuse 13 ist ein Kolben 14 verschiebbar gehalten und mit einem Überbrückungsglied 14a mit der Bremszange 8 verbunden. Das

Überbrückungsglied 14a ist in Fig. 1 symbolisch für eine gelenkige Verbindung dargestellt.

Das Zylindergehäuse 15 des Druckzylindes 12 ist an der Gabelbrücke 7 befestigt. An dieser Gabelbrücke kann auch ein nicht dargestellter Lenkkopf vorgesehen sein. Der nicht erkennbare Kolben des Druckzylinders 12 weist eine Kolbenstange 16 auf, die aus dem Zylindergehäuse 12 heraustritt und an der Gabelbrücke 6 befestigt ist. Die Leitungen 11 zwischen den Zylindern 10 und 12 weisen wenigstens in einem Teilbereich ein flexibles Stück auf, um den Höhenstandsänderungen des Zylindergehäuses 12 und des Geberzylinders 10 bei Federbewegungen gerecht zu werden.

Bei einem Bremsvorgang greift die Bremszange 8 mit den nicht erkennbaren Bremsbacken auf die Bremsscheibe 9. Die Bremszange wird dabei in Richtung Geberzylinder 10 gedreht und sie drückt den Kolben 14 in das Zylindergehäuse 13 hinein. In der im Geberzylinder 10 befindlichen Hydraulikflüssigkeit baut sich ein Druck auf, der sich über die Leitungen 11 in den Druckzylinder 12 fortpflanzt. Der Druckzylinder 12 versucht nun die beiden Gabelbrücken und somit die mit diesen verbundenen Rohre 1 und 2 in axialer Richtung auseinanderzudrücken. Da das Vorderrad 5 auf der Fahrbahn sich befindet, erfahren die Standrohre eine nach oben gerichtete Kraft, die der nach unten gerichteten Kraft aus der dynamischen Achslastveränderung entgegenwirkt.

In Fig. 3 zeigt sich der Teleskopstoßdämpfer im Längsschnitt. Hier zeigt sich, daß die Feder 3 zwischen einer Verschlußkappe 18 des Standrohres 2 und einem Dämpferkolben 19 angeordnet ist. Der Dämpferkolben 19 sitzt auf einer rohrförmigen Kolbenstange 20, die axial ausgerichtet am Boden 3a des Gleitrohres 3 befestigt ist. Der Dämpferkolben 19 bildet im Standrohr 3 eine obere Arbeitskammer 21 und eine untere Arbeitskammer 22 aus. Die Arbeitskammern 21, 22 sind über Dämpfungsbohrungen 23 in der Kolbenstange 20 und im Dämpferkolben 19 miteinander verbunden. Der Hohlraum 24 der Kolbenstange 20 öffnet sich in die obere Arbeitskammer 21. An das andere Ende des Hohlraums 20 schließt sich ein Kanal 25 an, der in der Druckkammer 26 des Geberzylinders 10 mündet. Der Kanal 25 ist aus Herstellungsgründen teilweise aus separaten Bauteilen gebildet, die mit dem Gleitrohr 3 verschraubt sind. Soweit es möglich ist, wird der Kanal 23 durch eine Bohrung in der Wandung des Gleitrohres 3 hergestellt.

Die Arbeitskammern 21, 22, der Hohlraum 24, der Kanal 25 und die Druckkammer 26 sind vollständig mit Hydraulikflüssigkeit gefüllt. Bei normalen Einfederungsbewegungen des Standrohres 3 in das Gleitrohr 1 wird durch die Hydraulikflüssigkeit der Kolben 14 in Richtung Bremszange 8 gedrückt, die wiederum über die Verbindung 14a um die Lagerachse 4 gedreht wird. Die Verbindung zwischen Kolben 13 und Bremszange 8 ist auch hier wieder nur schematisch dargestellt. Bei einem Bremsvorgang drückt die Bremszange 8 auf den Kolben 14. Im Druckraum 26 und über den Kanal 25 und den Hohlraum 24 pflanzt sich der Druck in den Arbeitskammern 21,22 fort. Es ergibt sich daraus eine nach oben resultierende Kraft. Diese Kraft ist wiederum der das Eintauchen bewirkenden Kraft aus der dynamischen Achslaständerung entgegengerichtet, die das Standrohr 2 in das Gleitrohr 1 hineinzudrücken versucht.

Patentansprüche:

1. Federnde Vorderradaufhängung für Motorräder mit auf das Vorderrad wirkenden Bremsmitteln, die beim Bremsvorgang ein hydraulisches System beaufschlagen, wobei das hydraulische System aus einem Geberzylinder und einem mit diesem über Leitungen verbundenen Druckzylinder besteht, dadurch gekennzeichnet, daß der Druckzylinder zwischen dem gefederten und ungefederten Abschnitt der Vorderradaufhängung angeordnet ist, derart, daß während eines Bremsvorgangs der Druckzylinder die beiden Abschnitte auseinander zu drücken versucht.

2. Vorderradaufhängung nach Anspruch 1, mit einer Vorderradgabel, bei der die Gabelschenkel als Teleskopstoßdämpfer gebildet sind und aus einem die Achswelle des Vorderrades aufnehmenden Gleitrohr und einem in das Gleitrohr gegen die Kraft einer Druckfeder eintauchbaren Standrohr bestehen, und mit mindestens einer um die Achswelle drehbar gelagerten Bremszange, die mit einer am Vorderrad angeordneten Bremsscheibe zusammenwirkt und die beim Bremsvorgang auf einen Kolben des Geberzylinders drückt, dadurch gekennzeichnet, daß an wenigstens einem Gleitrohr (1) das Zylindergehäuse (13) des Geberzylinders (10) ausgeformt ist.

3. Vorderradaufhängung nach Anspruch 2, bei der die Gleitrohre und die Standrohre jeweils mit einer Gabelbrücke zusammengehalten sind, dadurch gekennzeichnet, daß das Zylindergehäuse (15) des Druckzylinders (12) an der Gabelbrücke (7) der Standrohre (2) und der Kolben über eine Kolbenstange (16) an der Gabelbrücke (6) der Gleitrohre (1) befestigt ist.

4. Vorderradaufhängung nach Anspruch 3, bei der die Gabelbrücke der Standrohre einen Lenkkopf aufweist, dadurch gekennzeichnet, daß das Zylindergehäuse des Druckzylinders und der Lenkkopf zu einer Baueinheit zusammengefaßt sind.

5. Vorderradaufhängung nach einem oder mehreren der Ansprüche 1-4, dadurch gekennzeichnet, daß in den Leitungen zwischen dem Geber- und Druckzylinder Drosselelemente für die durchströmende Hydraulikflüssigkeit vorgesehen sind.

6. Vorderradaufhängung nach Anspruch 2, bei der ein mit dem Gleitrohr über eine Kolbenstange verbundener Dämpferkolben im Standrohr eine obere und eine untere Arbeitskammer für eine Dämpfungsflüssigkeit ausbildet, und für die während des Einfederns der Vorderradgabel ein Ausgleichsraum vorgesehen ist, dadurch gekennzeichnet, daß die Druckkammer (26) des Geberzylinders (10) als Ausgleichsraum dienend mit wenigstens einer der Arbeitskammern (21;22) des Standrohres (2) verbunden ist.

7. Vorderradaufhängung nach Anspruch 6, dadurch gekennzeichnet, daß die Kolbenstange (20) des Dämpferkolbens (19) als ein sich in die obere Arbeitskammer (21) öffnendes Rohr ausgelegt ist, dessen Hohlraum (24) über einen Kanal (25) im Gleitrohr (1) mit dem Druckraum (26) des Geberzylinders (10) in Verbindung steht.

0110188

_Fig. 1_

_Fig.2_

_Fig. 3_

Europäisches Patentamt

**EUROPÄISCHER RECHERCHENBERICHT**

0110188

Nummer der Anmeldung

EP 83 11 1006

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,P | US-A-4 367 882 (ALEXANDER) <br> * Insgesamt * | 1,2,5 | B 62 K 25/08 |
| X | FR-A-2 503 082 (OFFENSTADT) <br> * Abbildungen 2,4,5; Seite 2, Zeile 16 - Seite 3, Zeile 23; Seite 9, Zeile 14 - Seite 10, Zeile 29 * | 1,2,6 | |
| A | NL-A-7 407 263 (YAMAHA) <br> * Abbildungen 1,2 * | 3,4 | |
| A | DE-A-2 533 173 (HONDA) <br> * Abbildung 5; Seite 13, Zeile 11 - Seite 14, Zeile 13 * | 7 | |
| A,D | WO-A-8 200 445 (SCHULTZ) <br> * Abbildungen 1-3 * | 1 | |

|  | RECHERCHIERTE SACHGEBIETE (Int. Cl. 3) |
|---|---|
|  | B 62 K |

Der vorliegende Recherchenbericht wurde für alle Patentansprüche erstellt.

| Recherchenort | Abschlußdatum der Recherche | Prüfer |
|---|---|---|
| DEN HAAG | 23-02-1984 | DUBOIS B.F.J. |